(19) **Europäisches Patentamt / European Patent Office / Office européen des brevets**

(11) **EP 1 464 451 B1**

(12) **EUROPEAN PATENT SPECIFICATION**

(45) Date of publication and mention
of the grant of the patent:
**14.07.2010 Bulletin 2010/28**

(21) Application number: **02805016.9**

(22) Date of filing: **19.11.2002**

(51) Int Cl.:
**B25J 5/00** (2006.01)

(86) International application number:
**PCT/JP2002/012057**

(87) International publication number:
**WO 2003/051582 (26.06.2003 Gazette 2003/26)**

(54) **BIPEDAL WALKING TYPE MOVING DEVICE; AND WALKING CONTROL DEVICE AND WALKING CONTROL METHOD THEREFOR**

ZWEIBEINIGE SCHREITBEWEGUNGSVORRICHTUNG UND SCHREITSTEUERVORRICHTUNG UND -VERFAHREN DAFÜR

DISPOSITIF MOBILE DE TYPE MARCHE DE BIPEDE, ET DISPOSITIF DE COMMANDE DE MARCHE ET PROCEDE DE COMMANDE DE MARCHE CORRESPONDANT

(84) Designated Contracting States:
**DE FR GB NL**

(30) Priority: **19.12.2001 JP 2001386693**

(43) Date of publication of application:
**06.10.2004 Bulletin 2004/41**

(73) Proprietor: **Japan Science and Technology Agency**
**Kawaguchi-shi,**
**Saitama 332-0012 (JP)**

(72) Inventors:
• **KITANO, Hiroaki**
**Kawagoe-shi, Saitama 350-0035 (JP)**
• **FURUTA, Takayuki**
**Setagaya-ku, Tokyo 156-0057 (JP)**
• **OKUMURA, Yu**
**Fujisawa-shi, Kanagawa 251-0028 (JP)**
• **TAWARA, Tetsuo**
**Bunkyo-ku, Tokyo 113-0021 (JP)**

(74) Representative: **Henseler, Daniela et al**
**Sparing Röhl Henseler**
**Patentanwälte**
**Postfach 14 04 43**
**40074 Düsseldorf (DE)**

(56) References cited:
**EP-A- 1 081 027**      **EP-A1- 0 406 018**
**EP-A2- 0 433 091**      **WO-A1-01/74546**
**JP-A- 7 121 214**       **JP-A- 7 205 069**
**JP-A- 9 212 203**       **US-A- 5 455 497**
**US-A- 5 974 366**

• **KAJITA S ET AL: "Adaptive gait control of a biped robot based on realtime sensing of the ground profile" ROBOTICS AND AUTOMATION, 1996. PROCEEDINGS., 1996 IEEE INTERNATIONAL CONFERENCE ON MINNEAPOLIS, MN, USA 22-28 APRIL 1996, NEW YORK, NY, USA,IEEE, US, vol. 1, 22 April 1996 (1996-04-22), pages 570-577, XP010162810 ISBN: 0-7803-2988-0**
• **KAJITA S ET AL: "ADAPTIVE GAIT CONTROL OF A BIPED ROBOT BASED ON REALTIME SENSING OF THE GROUND PROFILE" AUTONOMOUS ROBOTS, KLUWER ACADEMIC PUBLISHERS, DORDRECHT, NL, vol. 4, no. 3, 1997, pages 297-305, XP000659961 ISSN: 0929-5593**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a biped (two-footed) walking mobile apparatus, and more specifically to its walk control which leads to walk stability.

Background Art

A conventional biped walking robot is so designed as to form a pre-determined walk pattern (hereinafter to be called gait) data, control walk according to the gait data, and actuate leg portions by pre-determined walk patterns, thereby to realize biped walking.

However, for such biped walking robots, a walking posture tends to be unstable due to, for example, road surface conditions, or the errors of physical parameters of robots themselves and other factors. Consequently, the biped walking robot falls down in some cases. On the other hand, if a walk control is conducted while recognizing the robot's walking state at real time without the pre-determining gait data, it may be possible to stabilize the walking posture, but, even in such cases, if unpredicted road surface conditions or the like are encountered, the walking posture goes unbalanced, and the robot falls down.

For this reason, what is called ZMP (Zero Moment Point) Compensation is necessary, whereby the points on the sole of a foot of the robot at each of which the composite momentum of floor reaction force and gravity becomes zero are converged to a target value by a walk control. Control methods for the ZMP compensation have been known including a method as described in JP 5-305583 A in which compliance control is used to converge the ZMPs to a target value and thereby to accelerate the upper body of the robot, and a method in which the locations on which the feet of the robot are being grounded are modified.

Here, a stabilization of a robot is targeted by a ZMP regulation in such control methods, and in such the ZMP regulation it is the premise that each foot of the robot does not slip on a floor face. However, for the biped walking robot of such constitution, a precise ZMP compensation becomes impossible in the circumstance where each sole of a robot's foot slips, for example, on such a road surface where the foot stance is unstable as on a wet floor, ice, mud, or the carpet of long hair, and the robot's stability can not be maintained, thereby its biped walking is difficult.

Patent document EP-A1-0 406 018 discloses a biped walking mobile apparatus according to the preamble of claim 1.

Disclosure of the Invention

It is the object of the present invention, taking into consideration the above-mentioned problems, to provide a biped walking mobile apparatus, its walk controller, and walk control strategy therefor to realize walk stability even on the unstable floor surface where soles slip.

The above-mentioned objective is achieved in accordance with the first aspect of the present invention with the biped walking mobile apparatus, which comprises a main body having at both sides of its lower part a pair of leg portions attached thereto so as to be each pivotally movable biaxially, each of the leg portions having a knee portion in its midway and a foot portion at its lower end, the foot portions being attached to their corresponding leg portions so as to be pivotally movable biaxially, drive means for pivotally moving leg, knee, and foot portions, respectively, a gait forming portion to form gait data including data for a target angular path, data for a targeted angular velocity and data for a targeted angular acceleration responsive to a demand for motion, and a walk controller for controlling respective driving actions of said drive means on the basis of said gait data, characterized by at least two or more 3-axis force sensors attached to each foot portion to detect forces applied to a sole of a foot portion, and said walk controller comprising: a compensation part for correcting said gait data from said gait forming part based on a horizontal floor reaction force computed from the detected signal from said respective 3-axis force sensors.

A biped walking mobile apparatus in accordance with the present invention is preferably provided with said main body which is a upper body of a humanoid robot, and a head portion and both hand portions are attached thereto, and a sole of its each foot portion is divided to the plurality of sections, each of which is provided with a 3-axis force sensor. The biped walking mobile apparatus in accordance with the present invention is preferably such that said compensation part computes a hexaxial force based on the detected signals from each 3-axis force sensor. Said compensation part preferably automatically calibrates the detected signals from each 3-axis force sensor by auto calibration.

The above-mentioned objective is also achieved in accordance with the second aspect of the present invention with the biped walking mobile apparatus, which comprises a main body having at both sides of its lower part a pair of leg portions attached thereto so as to be each pivotally movable biaxially, each of the leg portions having a knee portion in its midway and a foot portion at its lower end, the foot portions being attached to their corresponding leg portions so as to be pivotally movable biaxially, drive means for pivotally moving respective leg, knee, and foot portions, and a gait forming part for forming gait data including data for a target angular path, data for a targeted angular velocity and data for a targeted angular acceleration responsive to a demand for motion, whereby said walk controller controls respective driving actions of said drive means on the basis of said gait data, characterized by at least two or more 3-axis force sensors attached to each foot portion to detect forces applied to a sole of the foot portion, and said walk controller comprises a compensation part for correcting said gait data from said gait forming part based on a horizontal floor reaction force computed from the detected signal from said respective 3-axis force sensors.

A walk controller of a biped walking mobile apparatus in accordance with the present invention is preferably such that the sole of its each foot portion is divided to the plurality of sections, each of which is provided with a 3-axis force sensor. Said compensation part computes a hexaxial force based on the detected signals from each 3-axis force sensor. Said compensation part preferably automatically calibrates the detected signals from each 3-axis force sensor by auto calibration.

The above-mentioned objective is further achieved in accordance with the third aspect of the present invention with the biped walking mobile apparatus, which comprises a main body having at both sides of its lower part a pair of leg portions attached thereto so as to be each pivotally movable biaxially, each of the leg portions having a knee portion in its midway and a foot portion at its lower end, the foot portions being attached to their corresponding leg portions so as to be pivotally movable biaxially, drive means for pivotally moving respective leg, knee, and foot portions, and a gait forming part for forming gait data including data for a target angular path, data for a targeted angular velocity and data for a targeted angular acceleration responsive to a demand for motion, whereby the strategy controls respective driving actions of said drive means on the basis of said gait data, characterized by said walk controlling strategy comprising a first step for detecting forces applied to soles of respective foot portions by force sensors, and a second step for correcting said gait data from said gait forming part based on a horizontal floor reaction force among said forces detected by said force sensors.

A walk controlling strategy of a biped walking mobile apparatus in accordance with the present invention is preferably such that the sole of its each foot portion is divided to the plurality of sections, each of which is provided with a force sensor. A force sensor provided at said each divided section is preferably a 3-axis force sensor, and said compensation part computes a hexaxial force based on the detected signals from each force sensor. Said compensation part preferably automatically calibrates the detected signals from each force sensor by auto calibration.

According to the above-described aspects, the drive means is drive-controlled by adjusting the gait data from the gait forming part by the compensation part based on the horizontal floor reaction force detected by the force sensor set to a sole of each foot portion. Consequently, when landing on to the floor surface where each sole of a robot's foot portions slip, stabilization of the main body, preferably a robot's upper body, is targeted by adjusting the gait data based on the horizontal floor reaction force generated by the friction force between a sole and floor surface. By this process, a robot's stability can be maintained even in the circumstance where each sole of a robot's foot is slippery, for example, on such road surface where the foot stance is unstable as on wet floor, ice, mud, or the carpet of long hair, thereby reliable walk control becomes possible.

In case that a sole of each foot portion is divided to the plurality of sections, and said each section is provided with a force sensor, since the horizontal floor reaction force can be detected as a whole by said force sensor provided to each divided section, the force applied to each force sensor provided respectively to each divided section is dispersed in landing state of a robot's each foot portion. Therefore, a small and light-weighted force sensor can be used, thereby cost can be reduced. Also, since a resolution of each 3-axis force sensor is improved by dispersing the force applied to each force sensor, an AD converter of low quality and low cost can be used for AD conversion of the detected signals of each 3-axis force sensor in order to obtain the same resolution.

Further, in case that a part of a robot's each foot portion is on the floor surface, a horizontal floor reaction force can be reliably detected. Accordingly, a robot's stability can be maintained, thereby reliable walk control becomes possible even when a part of a sole of a robot's each foot portion contacts with the floor surface due, for example, to its roughness.

In case that said compensation part computes a hexaxial force based on the detected signals from each 3-axis force sensor, since the hexaxial force can be computed at least from two 3-axis force sensor, hexaxial force can be detected by using cheaper 3-axis force sensor, respectively, at each divided section similarly with a hexaxial force sensor, thereby cost can be reduced.

In case that said compensation part automatically calibrates the detected signals from each 3-axis force sensor by auto calibration, the horizontal floor reaction force can be accurately detected by the detected signals from each force sensor autocalibrated by auto calibration, even if the detection accuracy may be changed for individual 3-axis force sensors by the surrounding temperature or the aged deterioration.

The present invention will better be understood from the following detailed description and the drawings attached hereto showing certain illustrative forms of embodiment of the present invention. In this connection, it should be noted that such forms of embodiment illustrated in the accompanying drawings hereof are intended in no way to limit the present invention but to facilitate an explanation and an understanding thereof, in which drawings :

Fig. 1 is a schematic view illustrating the mechanincal makeup of a biped walking robot according to the present invention as one form of embodiment thereof;

Fig. 2 is a block diagram illustrating the electrical makeup of a biped walking robot shown in Fig. 1;

Fig. 3 is a schematic perspective view illustrating the makeup of a force sensor provided to a sole of each foot portion of a biped walking robot shown in Fig. 1, where (A) is a diagonal view from upper side, and (B) is a diagonal view from lower side;

Fig. 4 is a schematic perspective view illustrative the makeup of each 3-axis force sensor constituting the force sensor shown in Fig. 3, where (A) is a diagonal view from upper side, and (B) is a diagonal view from lower side;

Fig. 5 is a graph showing the location of each 3-axis force sensor shown in Fig. 4, and the origin of force measurement; and

Fig. 6 is a flowchart showing the walk control motion of a biped walking robot shown in Fig. 1.

Best Modes for Carrying out the Invention

Hereinafter, the present invention will be described in detail with reference to suitable forms of embodiment thereof illustrated in the figures.

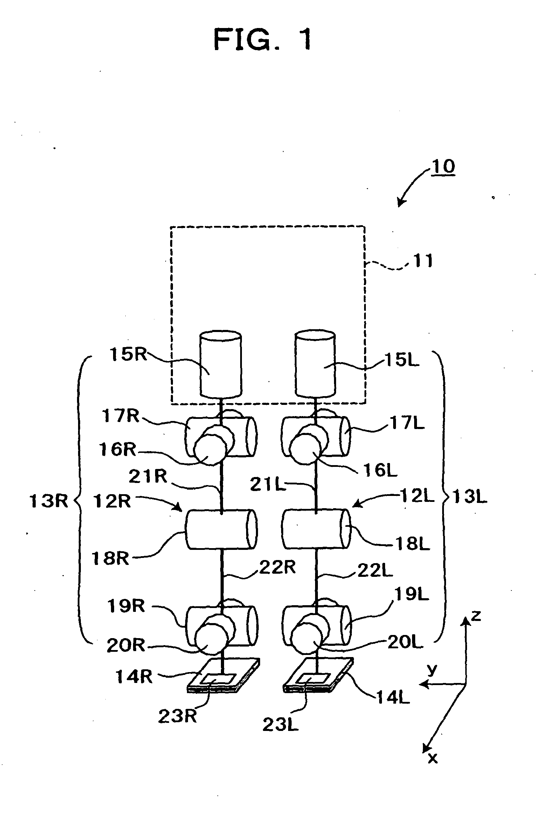

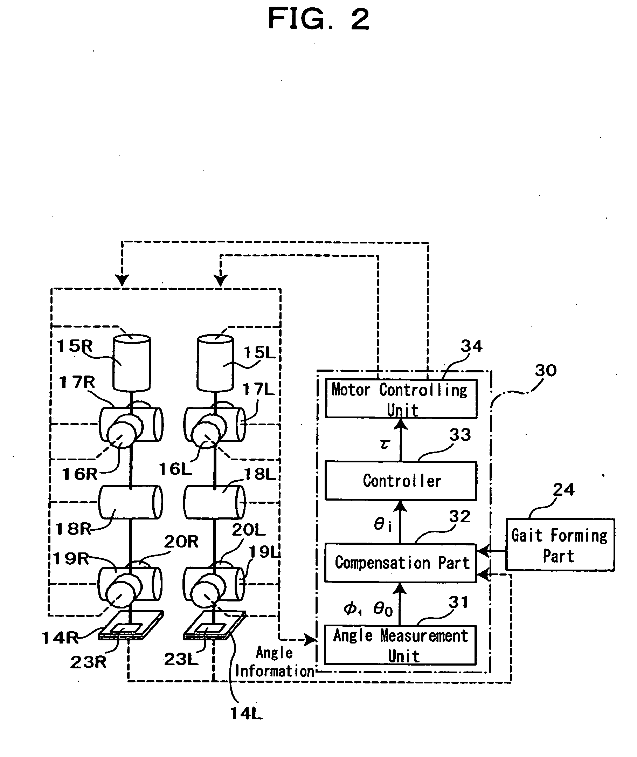

Fig. 1 and Fig. 2 show the makeup of an embodiment of a biped walking robot with a biped walking mobile apparatus applied thereto in accordance with the present invention. Referring to Fig. 1, a biped walking robot 10 includes an upper body which is a main body 11 having at both sides of its lower part a pair of leg portions 13L and 13R attached thereto, each of the leg portions having a knee portion 12L, 12R in its midway, and a foot portion 14L, 14R attached to a lower end of the leg portion 13L. 13R

Here, each of leg portions 13L, 13R has six joint portions, namely in the order from above, the joint portion 15L, 15R for the leg portion rotation of a waist (around z axis) with respect to the upper body 11, the joint portion 16L, 16R for the roll direction of the waist (around x axis), the joint portion 17L, 17R for the pitch direction of the waist (around y axis), the joint portion 18L, 18R for the pitch direction of the knee portion 12L,12R, the joint portion 19L, 19R for the pitch direction of an ankle portion with respect to the foot portion 14L, 14R, and the joint portion 20L, 20R for the roll direction of the ankle portion. Further, each joint portion 15L, 15R to 20L, 20R is constituted with a joint driving motor. Thus, a waist joint comprises the joint portions 15L, 15R, 16L, 16R, 17L, and 17R, and a foot joint comprises the joint portions 19L, 19R, 20L, and 20R.

Further the waist joint and a knee joint are connected with thigh links 21L, 21R, and the knee joint and the foot joint are connected with lower thigh links 22L, 22R. Thus, the leg portions 13L, 13R and the foot portions 14L, 14R at both sides, left and right, of the biped walking robot 10 have six degrees of freedom, respectively, and it is so made up to be capable of walking at will in a three dimensional space by drive-controlling these twelve joint portions during walk with respective drive motors at appropriate angles, and by giving desired motions to whole leg portions 13L, 13R, and foot portions 14L, 14R.

Further, the foot portions 14L, 14R are provided with force sensors 23L, 23R at the soles (bottom surfaces). The force sensors 23L, 23R detect, as described later, forces at respective foot portions 14L, 14R, a horizontal floor reaction force in particular. Here, the upper body 11 is illustrated like a mere box, but actually it may be provided with a head portion or two hands.

Fig.2 illustrates a electrical makeup of the biped walking robot 10 shown in Fig.1. In Fig.2, the biped walking robot 10 is provided with a gait forming part 24 to form gait data responsive to a demand for motion, and a walk controller 30 to control respective driving actions of drive means namely the above-mentioned respective joint portions, that is, the joint driving motors 15L, 15R, to 20L, 20R based on the gait data. Here, xyz coordinate system is used as that for the biped walking robot 10 with x direction as anteroposterior direction (forward as +), with y direction as crosswise direction (inner direction as +), and with z direction as vertical direction (upper direction as +). The gait forming part 24 forms the gait data, responding to the targeted motion input from the outside. The gait data includes target angle path, target angle velocity, and target angle acceleration of respective joint portions 15L, 15R, to 20L, 20R required for the biped walking robot 10 to walk.

The walk controller 30 comprises an angle measurement unit 31, a compensation part 32, a controlling part 33, and a motor controlling unit 34. The angle measurement unit 31 is to measure the angular positions of respective joint drive motors, that is, a state vector $\phi$ about angle and angle velocity, and outputs to the compensation part 32, by inputting the angular information of respective joint drive motors form, for example, a rotary encoder or the like provided in the joint drive motors of respective joint portions 15L, 15R to 20L, 20R. The compensation part 32 computes a horizontal floor reaction force F based on a detected ouput from force sensors 23L, 233R, and corrects the gait data from the gait forming part 24 based on the horizontal floor reaction force F and the state vector $\phi$ from the angle measurement unit 31, thereby ouputs the vector $\theta_i$ ($i$ = 1 to n, where n is the freedom about the walk of the robot 10) to the controlling part 33. The controlling part 33 forms a control signal of respective joint drive motors, that is, a torque vector $\tau$ based on a vector ($\theta_i$ - $\theta_0$), by subtracting the angular vector $\theta_0$ at a robot's respective joint portions form the vector $\theta_i$ which is the

gait data corrected by the compensation part 32. Further, the motor controlling unit 34 controls respective driving actions of the joint drive motors according to the control signal (the torque vector $\tau$) from the controlling part 33.

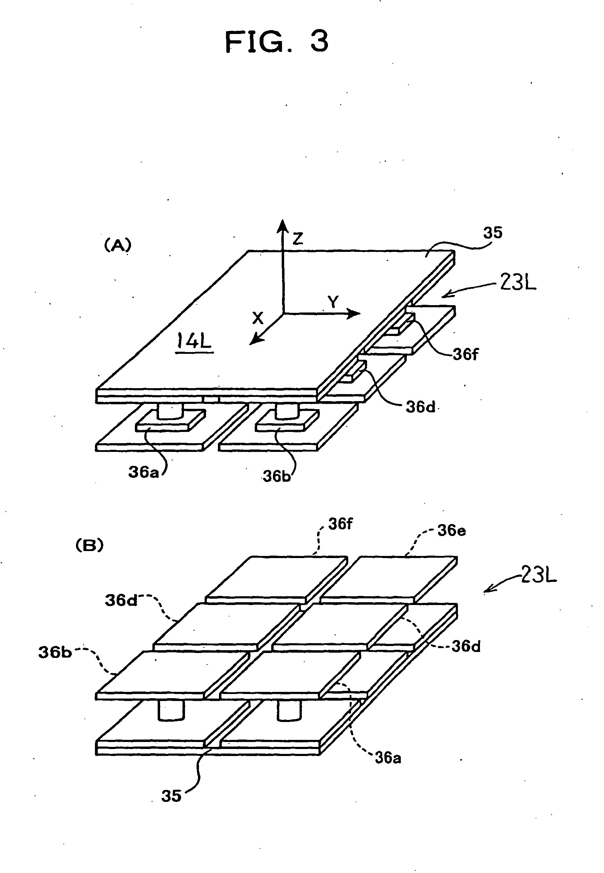

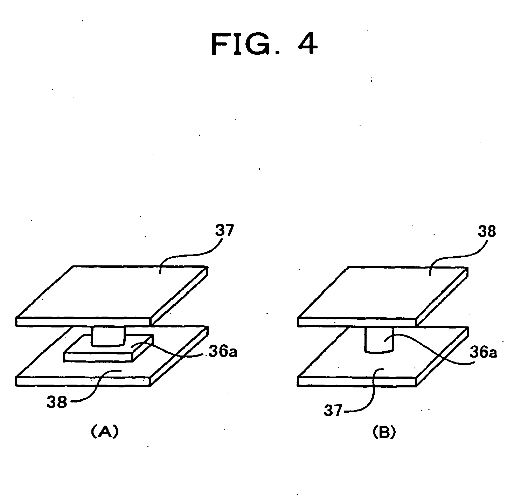

Here explanation is made, referring to Fig. 3, of the force sensor 23L, for the force sensors 23L, 23R are constituted symmetrically with respect to the left and right. In Fig.3, the force sensor 23L comprises six force sensors 36a, 36b, 36c, 36d, 36e, and 36f, made up by horizontally divided, namely, three divisions in x direction and two divisions in y direction at an bottom of a sole plate 35 which is an bottom face of the foot portion 14L. Since each of the force sensors 36a, 36b, 36c, 36d, 36e, and 36f is of identical structure, explanation is made of the force sensor 36a, referring to Fig.4.

In Fig.4, the force sensor 36a is a 3-axis force sensor provided between a upper sole 37 and a lower 38, and detects a force received from a floor surface when the foot portion 14L lands on to a floor. The lower sole 38 is supported pivotally movably to the front and behind, the left and right, with the sensor axis of the force sensor 36a as the center, and is so designed as to be capable of landing in all directions by pivoting. Here in this case, the force sensors 23L and 23R are divided to six each, but the case should not be limited to this, and it may be at least four divisions at both sides of heel portions and both sides of toe portions of respective foot portions 14L, 14R, or may be divided to seven or more. Also each of force sensors 36a to 36f in the Figure arranged in a line at a sole, but the case should not be limited to this, and it may be arranged arbitrarily. Thus a shock can be absorbed by each of 3-axis force sensors by landing to the floor from the heel portion of the foot portions 14L, 14R upon robot 10's walk.

Here, in general, if four or more force sensors are arranged on a same plane, it is geometrically impossible for each to detect a force with all force sensors in landing state, thereby those more than four are regarded as excess. But in this case, since each divided part is divided from each other, all the force sensors 36a to 36f are capable of landing on the floor, and of detecting forces without force sensors in excess. Therefore, since the force from the landing on to the floor surface by foot portions 14L, 14R is dispersed and applied to each force sensor 36a to 36f, a small and light-weighted force sensor can be used, thereby cost for each force sensor 36a to 36f can be reduced. Also, since the force applied to each force sensor 36a to 36f becomes small, the resolution is improved. Therefore, an AD converter of relatively low quality and low cost can be used for AD conversion of the signals from each force sensor 36a to 36f in order to obtain the same resolution, thereby the cost for an AD converter can be reduced.

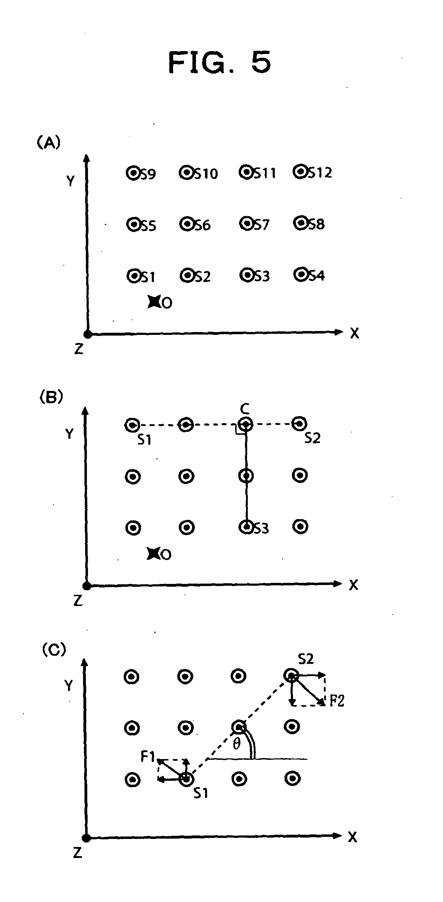

Here, the above-mentioned force sensors 36a to 36f are 3-axis force sensors, and with two or more 3-axis force sensors, forces of hexaxial directional can be computed. Hereinafter, explanation is made, referring to Fig.5, of computation of the forces of the hexaxial directional from 3-axis force sensors of n pieces in number in general.

In Fig.5, 3-axis force sensors of n pieces S1, S2, S3, ---, Sn are arranged at a sole with respect to the origin O (Ox, Oy) of force measurement. In this connection, the origin O of force measurement preferably better agrees, for example, to the drive coordinate system of a foot joint.

Here, if a position of each 3-axis force sensor Si is assumed as Si = (X(i), Y(i)), then the forces of hexaxial direction are given, respectively, as the equations below. That is, the forces FX, FY, FZ of respective directions are given as

$$F_X = \sum_{i=1}^{n} f_{X(i)} \qquad (1),$$

$$F_Y = \sum_{i=1}^{n} f_{Y(i)} \qquad (2),$$

$$F_Z = \sum_{i=1}^{n} f_{Z(i)} \qquad (3),$$

and the torques TX, TY, TZ of respective directions are given as

$$T_X = \sum_{i=1}^{n} f_{Z(i)} \cdot \left( Y(i) - O_Y \right) \qquad (4),$$

$$T_Y = \sum_{i=1}^{n} f_{Z(i)} \cdot (X(i) - O_X) \qquad (5),$$

$$T_Z = \sum_{i=1}^{n} \left( f_{Y(i)} \cdot \cos\alpha + f_{X(i)} \cdot \sin\alpha \right) \sqrt{(X(i) - O_X)^2 + (Y(i) - O_Y)^2} \qquad (6),$$

where a in Equation (6) is given as

$$\alpha = a\tan\left( \frac{X(i) - O_X}{Y(i) - O_Y} \right) \qquad (7).$$

Thus, a computation is conducted by a computation circuit set up inside the compensation part 32 based on the detected output of respective 3-axis force sensors 36a to 36f, thereby the force of hexaxial direction is detected.

Further, from these hexaxial directional forces, a horizontal floor reaction force F is expressed as a resultant force of a horizontal forces generated from a friction of the floor surface and a robot 10's sole, that is, the horizontal floor reaction force F is expressed as the resultant force of forces FX and FY in X and Y directions, and its vector FC and its magnitude | FC | are given as

$$F_C = \begin{bmatrix} F_X \\ F_Y \end{bmatrix} \quad , \quad |F_C| = \sqrt{F_X^2 + F_Y^2} \qquad (8).$$

Here, each of 3-axis force sensors 36a to 36f has a fluctuation in the detected respective outputs, and the detected output fluctuates due to the surrounding temperature or the secular change. Therefore, the detected output from respective 3-axis force sensor 36a to 36f is automatically calibrated in the compensation part 32 by an auto calibration described below.

Explanation is first made of a calibration in z axis direction.

Among the 3-axis force sensors S1 to Sn dispersed and arranged as mentioned above, choose three arbitrary 3-axis force sensors, for example, S1, S2, and S3, and assume the coordinate positions of these as, respectively, S1 = X(1), Y(1), Z(1), S2 = X(2), Y(2), Z(2), S3 = X(3), Y(3), and Z(3). Hold the state of three point supporting so that only these 3-axis force sensors S1 to S3 are bearing the full load of the robot, draw a straight line, as shown in Fig.5(B), between two arbitrary 3-axis force sensors among these, for example, S1 and S2, and assume the cross point of the perpendicular line from the remaining one 3-axis force sensor S3 on this straight line as C.

Here, move statically a position of a barycenter of a drive object from S3 to C on the perpendicular line, and measure a voltage value output from S1 to S3 at that time. In this case, the more the measurement points on the move, the more accurate can be the calibration.

Assume f as the measured force, A,B as calibration parameters, V as voltage value at that time, M as total mass of the object of driving, g as the acceleration of gravity, and k as the measurement point, then the equations below are obtained.

$$\begin{cases} f_{z(1)k} = A_1 V_{z(1)k} + B_1 \\ f_{z(2)k} = A_2 V_{z(2)k} + B_2 \\ f_{z(3)k} = A_3 V_{z(3)k} + B_3 \end{cases} \qquad (9),$$

$$f_{z(1)k} + f_{z(2)k} + f_{z(3)k} = Mg \qquad (10),$$

$$f_{z(1)k} = f_{z(2)k} \qquad (11),$$

and

$$\begin{cases} f_{z(1)k} \cdot X(1) + f_{z(2)k} \cdot X(2) + f_{z(3)k} \cdot X(3) = 0 \\ f_{z(1)k} \cdot Y(1) + f_{z(2)k} \cdot Y(2) + f_{z(3)k} \cdot Y(3) = 0 \end{cases} \qquad (12).$$

Assume then V, M, and Y as known, solve these equations as the simultaneous equations of f, and substitute the result to Equation (13) below,

$$\begin{bmatrix} \sum_{k=0}^{n} 1 & \sum_{k=0}^{n} V_{z(i)k} \\ \sum_{k=0}^{n} V_{z(i)k} & \sum_{k=0}^{n} V_{z(i)k}^2 \end{bmatrix} \begin{bmatrix} B_z(i) \\ A_z(i) \end{bmatrix} = \begin{bmatrix} \sum_{k=0}^{n} f_{z(i)k} \\ \sum_{k=0}^{n} V_{z(i)k} f_{z(i)k} \end{bmatrix} \qquad (13),$$

and the desired slope A of the straight line F/V and the intercept B can be simultaneously obtained. Further, a correction parameter for calibration can be calculated by conducting the measurements of n times.

Thus, the calibration in z axis direction with respect to the above-mentioned three 3-axis force sensors S1 to S3 is completed. And all the calibration in z axis direction of all 3-axis force sensors can be conducted by choosing other three 3-axis force sensors, repeating the calculation of correction parameters in similar manner, and calculating the correction parmeters with respect to all 3-axis force sensors.

Explanation is further made of a calibration method with respect to XY axes.

Among the dispersed and arranged 3-axis force sensors S1 to Sn, choose two arbitrary 3-axis force sensors, for example, S1, S2 and generate a momentum m around z axis by utilizing a robot's upper body 11 or the leg portions 13L or 13R on the opposite side. Here, the momentum m and the forces F1, F2 applied upon 3-axis force sensors S1, S2 can be expressed as F1 = F2, and Equation (14) below,

$$m = F1 \cdot \sqrt{(X(1) - X(2))^2 + (Y(1) - Y(2))^2} \qquad (14).$$

Therefore, the forces F1, F2 applied upon individual 3-axis force sensors S1, S2 can be calculated, and their X and Y components are expressed as Equation (15) below,

$$\begin{cases} f_{x(1)} = F1 \cdot \cos\theta \\ f_{y(1)} = F1 \cdot \sin\theta \\ f_{x(2)} = F2 \cdot \cos\theta \\ f_{y(2)} = F2 \cdot \sin\theta \end{cases} \qquad (15),$$

where

$$\theta = a\tan\left(\frac{X(2) - X(1)}{Y(2) - Y(1)}\right).$$

On the other hand, the relationship between voltage V output from respective 3-axis force sensors S1, S2 and the forces fx, fy is expressed, with the measurement times as k, as Equation (16) below,

$$\begin{cases} f_{x(1)k} = A_{x(1)}V_{x(1)k} + B_{x(1)} \\ f_{x(2)k} = A_{x(2)}V_{x(2)k} + B_{x(2)} \\ f_{y(1)k} = A_{y(1)}V_{y(1)k} + B_{y(1)} \\ f_{y(2)k} = A_{y(2)}V_{y(2)k} + B_{y(2)} \end{cases} \quad (16).$$

Using these equations as simultaneous equations, and measuring n times, the determinants below can be obtained, and correction parameters A, B can be calculated,

$$\begin{bmatrix} \sum_{k=0}^{n} 1 & \sum_{k=0}^{n} V_{x(i)k} \\ \sum_{k=0}^{n} V_{x(i)k} & \sum_{k=0}^{n} V_{x(i)k}^2 \end{bmatrix} \begin{bmatrix} B_x(i) \\ A_x(i) \end{bmatrix} = \begin{bmatrix} \sum_{k=0}^{n} f_{x(i)k} \\ \sum_{k=0}^{n} V_{x(i)k} f_{x(i)k} \end{bmatrix} \quad (17),$$

$$\begin{bmatrix} \sum 1 & \sum V_{y(i)k} \\ \sum V_{y(i)k} & \sum V_{y(i)k}^2 \end{bmatrix} \begin{bmatrix} B_y(i) \\ A_y(i) \end{bmatrix} = \begin{bmatrix} \sum_{k=0}^{n} f_{y(i)k} \\ \sum_{k=0}^{n} V_{y(i)k} f_{y(i)k} \end{bmatrix} \quad (18).$$

Thus, calibration in XY axis direction can be conducted by calculating correction parameters A, B simultaneously in X and Y axis directions.

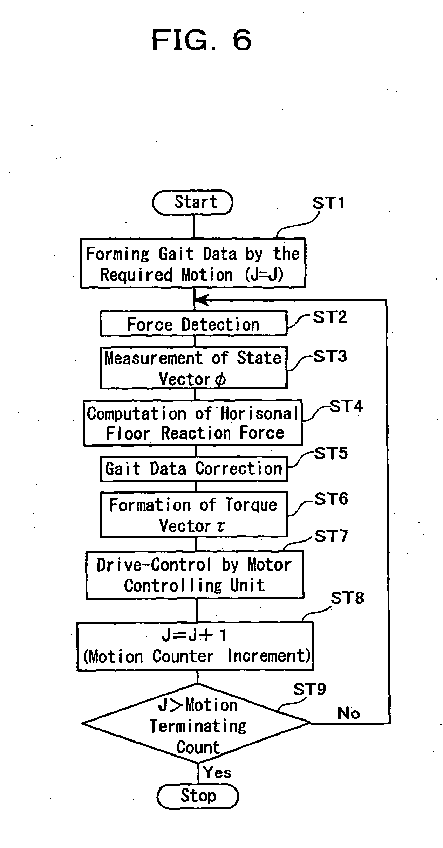

The biped walking robot 10 in accordance with the embodiment of the present invention is constituted as described above, and its walking motion is conducted by the flowchart shown in Fig.6 as described below.

In Fig.6 at step ST1, the gait forming part 24 forms gait data based on the input required motion (J = J), and outputs to the compensation part 32 of the walk controller 30. And at step ST2, the force sensors 23L, 23R attached to both foot portions 14L, 14R detect forces respectively, and output to the compensation part 32. Also at step ST3, the angle measurement unit 31 measures the state vector φ of respective joint portions 16L, 16R to 20L, 20R, and outputs to the compensation part 32. Following these processes at step ST4, the compensation part 32 computes a horizontal floor reaction force F based on the detected output from force sensors 23L, 23R. And at step ST5, the compensation part 32 corrects the gait data based on this horizontal floor reaction force F and the state vector φ of respective joint portions 16L, 16R to 20L, 20R from the angle measurement unit 31, and outputs the vector i to the controlling part 33.

Next at step ST6, the controlling part 33 subtracts a angle vector θ 0 in a robot's respective joint portions from the vector θ i, forms the control signal, that is, torque vector τ of respective joint drive motors based on a vector (θ i- θ 0), and outputs to the motor control unit 34. And at step ST7, the motor control unit 34 drive-controls the joint drive motors of respective joint portions based on this torque vector τ. Thus, the biped walking robot 10 conducts walking motions responsive to a demand for motion.

At step ST8 after that, the controlling part 33 sets J=J+1 by motion counter increment, and waits for the pre-determined sampling time, and at step ST9, if said J is smaller than the pre-determined motion terminating count, the above-described motion is repeated by returning to step 2 again. And at step ST9, if said J exceeds the motion terminating count, the motion is stopped.

In this case, the gait data for the biped walking robot 10, upon drive-controlling respective joint drive motors, is corrected based on the horizontal floor reaction force F from the force sensors 23L, 23R set at the soles of respective foot portions 14L, 14R by the compensation part 32, and a robot 10's stability is attained with this horizontal floor reaction force F as regulation by the vector θ i being formed. Thus, when a robot10's respective foot portions 14L, 14R land, for example, on a floor surface where soles slip, since the force sensors 23L, 23R set at the soles can detect the horizontal floor reaction force F, it is made possible to certainly conduct walking motions corresponding to the required motions. Therefore, even under the road surface condition where walking is difficult by the walk control with conventional ZMP regulation, for example, such as wet floor, ice, mud, or the carpet of long hair, where the foot stance is unstable, the walking motions are assured, while stable state is maintained, in accordance with the biped walking robot 10 of the present invention.

Further, since the force sensors 23L, 23R set at soles of respective foot portions 14L, 14R to detect the horizontal floor reaction force F is constituted with the 3-axis force sensors 36a to 36f provided to each of the divided six sections, the force applied to each 3-axis force sensor 36a to 36f provided at each divided section is dispersed, with each foot portion 14L, 14R being in the state of landing, thereby small and light-weighted sensors can be used as individual 3-axis force sensors 36a to 36f, and the cost can be reduced.

Also since the resolution is improved for each 3-axis force sensor 36a to 36f owing to the force applied to each force being dispersed, an AD converter of low quality and low cost can be used for AD conversion of the detected signals from each 3-axis force sensor 36a to 36f in order to obtain the same resolution. Consequently, the total cost can be reduced.

Further, in case that only a part of each foot portion 14L, 14R is on the floor surface, a horizontal floor reaction force can be reliably detected. Accordingly, a robot's stability can be maintained, thereby reliable walk control becomes possible even when only a part of a sole of a robot's each foot portion contacts with the floor surface due, for example, to its roughness.

Thus, in accordance with the biped walking robot 10 of the embodiment of the present invention, by correcting the gait data based on the horizontal floor reaction force F calculated from the detected signal from the force sensors 23L, 23R set on the soles of respective foot portions 14L, 14R, that is, 3-axis force sensors 36a to 36f respectively set on the soles divided in plurality, the walk control is conducted with the horizontal floor reaction force F generated from the friction between the soles and the floor surface, thereby a robot 10's walk stability can be realized even in the road surface state where soles slip.

While in the foregoing description of embodiment explanation is made of application of the present invention to a biped walking robot, it is obvious that the present invention is applicable to any biped walking mobile apparatus with other various parts supported with two legs, and walkable with these two legs.

Industrial Applicability

According to the present invention as described above, since the gait data from the gait forming part is corrected by the compensation part based on the horizontal floor reaction force detected by the force sensors set on the soles of respective foot portions, and the drive means is drive-controlled, so the robot's stability can be maintained even in the road surface state where the foot stance is unstable, for example, such as wet floor, ice, mud, or the carpet of long hair, or in case that only a part of the sole of the robot's respective foot portion is in contact with floor surface due, for example, to its roughness, and a reliable walk control is possible, thereby an extremely superb biped walking mobile apparatus, its walk controller, and the strategy of walk control are provided.

**Claims**

1. A biped walking mobile apparatus (10) comprising:

   a main body (11) having at both sides of its lower part a pair of leg portions (13L, 13R) attached thereto so as to be each pivotally movable biaxially, each of the leg portions (13L, 13R) having a knee portion (12L, 12R) in its midway and a foot portion (14L, 14R) at its lower end, the foot portions (14L, 14R) being attached to their corresponding leg portions (13L, 13R) so as to be pivotally movable biaxially, drive means (15L, 15R to 20L, 20R) for pivotally moving respective leg, knee, and foot portions, a gait forming part (24) for forming gait data including data for a target angular path, data for a targeted angular velocity and data for a targeted angular acceleration responsive to a demand for motion, and a walk controller (30) for controlling respective driving actions of said drive means (15L, 15R to 20L, 20R) on the basis of said gait data,
   **characterized in that**:
   at least two or more 3-axis force sensors (36a to 36f) are attached to each foot portion (14L, 14R) to detect forces applied to a sole of the foot portion (14L, 14R), and
   said walk controller (30) comprises a compensation part (32) for correcting the gait data from the gait forming part (24) based on a horizontal floor reaction force computed from the detected signal from said respective 3-axis force sensors (36a to 36f), and
   wherein said soles of respective foot portions (14L, 14R) are divided in plurality, and each divided section is provided with one of the 3-axis force sensors (36a to 36f).

2. The biped walking mobile apparatus (10) as set forth in Claim 1, **characterized in that** said main body (11) is an upper body of a humanoid robot provided with a head portion and two hand portions.

3. The biped walking mobile apparatus (10) as set forth in Claim 1 or 2, **characterized in that** said compensation part (32) computes a hexaxial directional force based on the detected signals from respective 3-axis force sensors (36a to 36f).

4. The biped walking mobile apparatus (10) as set forth in Claim 3, **characterized in that** said compensation part (32) automatically calibrates the detected signals from respective 3-axis force sensors (36a to 36f) by auto calibration.

5. A walk controlling strategy for a biped walking mobile apparatus (10) which includes: a main body (11) having at both sides of its lower part a pair of leg portions (13L, 13R) attached thereto so as to be each pivotally movable biaxially, each of the leg portions (13L, 13R) having a knee portion (12L, 12R) in its midway and a foot portion (14L, 14R) at its lower end, the foot portions (14L, 14R) being attached to their corresponding leg portions (13L, 13R) so as to be pivotally movable biaxially, drive means (15L, 15R to 20L, 20R) for pivotally moving respective leg, knee, and foot portions, and a gait forming part (24) for forming gait data including data for a target angular path, data for a targeted angular velocity and data for a targeted angular acceleration responsive to a demand for motion, whereby the strategy controls respective driving actions of said drive means (15L, 15R to 20L, 20R) on the basis of said gait data,
   **characterized in that**:

   said walk controlling strategy includes, on the occasion of correction of said gait data, a first step for detecting forces applied to soles of respective foot portions (14L, 14R) by at least two or more 3-axis force sensors (36a to 36f), and a second step for correcting said gait data from said gait forming part (24) based on a horizontal floor reaction force computed from the detected signal from said 3-axis force sensors (36a to 36f), and wherein said soles of respective foot portions (14L, 14R) are divided in plurality, and each divided section is provided with one of the 3-axis force sensors (36a to 36f).

6. The walk controlling strategy for a biped walking mobile apparatus (10) as set forth in Claim 5, **characterized in that** a compensation part (32) computes a hexaxial directional force based on the detected signals from respective 3-axis force sensors (36a to 36f).

7. The walk controlling strategy for a biped walking mobile apparatus (10) as set forth in Claim 6, **characterized in that** said compensation part (32) automatically calibrates the detected signals from respective 3-axis force sensors (36a to 36f) by auto calibration.

**Patentansprüche**

1. Zweibeinige gehende mobile Vorrichtung (10), die umfasst:

   einen Hauptkörper (11), der an beiden Seiten in seinem unteren Teil ein Paar Beinabschnitte (13L, 13R) besitzt, die daran so befestigt sind, dass sie jeweils biaxial schwenkbar beweglich sind, wobei jeder der Beinabschnitte (13L, 13R) in seiner Mitte einen Knieabschnitt (12L, 12R) und an seinem unteren Ende einen Fußabschnitt (14L, 14R) besitzt, wobei die Fußabschnitte (14L, 14R) an ihren entsprechenden Beinabschnitten (13L, 13R) so befestigt sind, dass sie biaxial schwenkbar beweglich sind, Antriebsmittel (15L, 15R bis 20L, 20R), um jeweilige Beine, jeweilige Knie und jeweilige Fußabschnitte schwenkbar zu bewegen, einen Gangartformungsabschnitt (24), um in Reaktion auf eine Bewegungsanforderung Gangartdaten, die Daten für einen Soll-Winkelweg, Daten für eine Soll-Winkelgeschwindigkeit und Daten für eine Soll-Winkelbeschleunigung enthalten, zu formen, und eine Gehsteuereinheit (30), um jeweilige Antriebsaktionen der Antriebsmittel (15L, 15R bis 20L, 20R) anhand der Gangartdaten zu steuern,
   **dadurch gekennzeichnet, dass**:
   wenigstens an jedem Fußabschnitt (14L, 14R) zwei oder mehr dreiachsige Kraftsensoren (36a bis 36f) befestigt sind, um Kräfte zu detektieren, die auf eine Sohle des Fußabschnitts (14L, 14R) ausgeübt werden, und die Gehsteuereinheit (30) einen Kompensationsabschnitt (32) umfasst, um die Gangartdaten von dem Gangartformungsabschnitt (24) anhand einer Gegenkraft eines horizontalen Bodens, die aus dem detektierten Signal von den jeweiligen dreiachsigen Kraftsensoren (36a bis 36f) berechnet wird, zu korrigieren, und wobei die Sohlen der jeweiligen Fußabschnitte (14L, 14R) in mehrere Bereiche unterteilt sind und jeder unterteilte Bereich mit einem der dreiachsigen Kraftsensoren (36a bis 36f) versehen ist.

2. Zweibeinige gehende mobile Vorrichtung (10) nach Anspruch 1, **dadurch gekennzeichnet, dass** der Hauptkörper (11) ein Oberkörper eines menschenähnlichen Roboters ist, der mit einem Kopfabschnitt und mit zwei Handabschnitten versehen ist.

3. Zweibeinige gehende mobile Vorrichtung (10) nach Anspruch 1 oder 2, **dadurch gekennzeichnet, dass** der Kompensationsabschnitt (32) anhand der detektierten Signale von jeweiligen dreiachsigen Kraftsensoren (36a bis 36f) eine sechsachsige gerichtete Kraft berechnet.

4. Zweibeinige gehende mobile Vorrichtung (10) nach Anspruch 3, **dadurch gekennzeichnet, dass** der Kompensationsabschnitt (32) die detektierten Signale von jeweiligen dreiachsigen Kraftsensoren (36a bis 36f) durch Autokalibrierung automatisch kalibriert.

5. Geh-Steuerstrategie für eine zweibeinige gehende mobile Vorrichtung (10), die umfasst: einen Hauptkörper (11), der an beiden Seiten in seinem unteren Teil ein Paar Beinabschnitte (13L, 13R) besitzt, die daran so befestigt sind, dass sie jeweils biaxial schwenkbar beweglich sind, wobei jeder der Beinabschnitte (13L, 13R) in seiner Mitte einen Knieabschnitt (12L, 12R) und an seinem unteren Ende einen Fußabschnitt (14L, 14R) besitzt, wobei die Fußabschnitte (14L, 14R) an ihren entsprechenden Beinabschnitten (13L, 13R) so befestigt sind, dass sie biaxial schwenkbar beweglich sind, Antriebsmittel (15L, 15R bis 20L, 20R), um jeweilige Beine, jeweilige Knie und jeweilige Fußabschnitte schwenkbar zu bewegen, und einen Gangartformungsabschnitt (24), um in Reaktion auf eine Bewegungsanforderung Gangartdaten, die Daten für einen Soll-Winkelweg, Daten für eine Soll-Winkelgeschwindigkeit und Daten für eine Soll-Winkelbeschleunigung enthalten, zu formen, wobei die Strategie jeweilige Antriebsaktionen der Antriebsmittel (15L, 15R bis 20L, 20R) anhand der Gangartdaten steuert,
**dadurch gekennzeichnet, dass**:

die Geh-Steuerstrategie anlässlich der Korrektur der Gangartdaten einen ersten Schritt zum Detektieren von Kräften, die auf die Sohlen jeweiliger Fußabschnitte (14L, 14R) ausgeübt werden, durch wenigstens zwei oder mehr dreiachsige Kraftsensoren (36a bis 36f) und einen zweiten Schritt zum Korrigieren der Gangartdaten von dem Gangartformungsabschnitt (24) anhand einer Gegenkraft eines horizontalen Bodens, die aus dem detektierten Signal von den dreiachsigen Kraftsensoren (36a bis 36f) berechnet wird, umfasst, und
wobei die Sohlen jeweiliger Fußabschnitte (14L, 14R) in mehrere Bereiche unterteilt sind, wobei jeder unterteilte Bereich mit einem der dreiachsigen Kraftsensoren (36a bis 36f) versehen ist.

6. Geh-Steuerstrategie für eine zweibeinige gehende mobile Vorrichtung (10) nach Anspruch 5, **dadurch gekennzeichnet, dass** ein Kompensationsabschnitt (32) anhand der detektierten Signale von jeweiligen dreiachsigen Kraftsensoren (36a bis 36f) eine sechsachsige gerichtete Kraft berechnet.

7. Geh-Steuerstrategie für eine zweibeinige gehende mobile Vorrichtung (10) nach Anspruch 6, **dadurch gekennzeichnet, dass** der Kompensationsabschnitt (32) die detektierten Signale von jeweiligen dreiachsigen Kraftsensoren (36a bis 36f) durch Autokalibrierung automatisch kalibriert.

## Revendications

1. Dispositif mobile de marche bipède (10) comprenant :

un corps principal (11) sur lequel, des deux côtés de sa partie inférieure, une paire de parties de jambe (13L, 13R) est fixée de telle manière que chacune présente une liberté de mouvement pivotant suivant deux axes, chacune des parties de jambe (13L, 13R) comportant une partie de genou (12L, 12R) dans sa partie centrale et une partie de pied (14L, 14R) au niveau de son extrémité inférieure, les parties de pied (14L, 14R) étant fixées sur leurs parties de jambe (13L, 13R) correspondantes de manière à présenter une liberté de mouvement pivotant suivant deux axes, des moyens d'entraînement (15L, 15R à 20L, 20R) destinés à faire pivoter les parties de jambes, de genou, et de pied respectives, une partie de formation de démarche (24) destinée à former des données de démarche comportant des données d'une trajectoire angulaire cible, des données d'une vitesse angulaire cible et des données d'une accélération angulaire cible en réponse à une demande de déplacement, et une unité de commande de marche (30) destinée à commander des actions d'entraînement respectives desdits moyens d'entraînement (15L, 15R à 20L, 20R) sur la base desdites données de démarche,
**caractérisé en ce que** :
au moins deux ou plusieurs capteurs d'effort triaxiaux (36a à 36f) sont fixés sur chaque partie de pied (14L, 14R) afin de détecter les efforts appliqués sur une plante de la partie de pied (14L, 14R), et

ladite unité de commande de marche (30) comprend une partie de compensation (32) afin de corriger les données de démarche provenant de la partie de formation de démarche (24) sur la base d'un effort de réaction de plancher horizontal calculé à partir du signal détecté à partir desdits capteurs d'effort triaxiaux (36a à 36f) respectifs, et

dans lequel lesdites plantes desdites parties de pied (14L, 14R) respectives sont divisées en une pluralité (de sections), et chaque section divisée comporte au moins l'un des capteurs d'effort triaxiaux (36a à 36f).

2. Dispositif mobile de marche bipède (10) selon la revendication 1, **caractérisé en ce que** ledit corps principal (11) est un corps supérieur d'un robot humanoïde comportant une partie de tête et deux parties de main.

3. Dispositif mobile de marche bipède (10) selon la revendication 1 ou 2, **caractérisé en ce que** ladite partie de compensation (32) calcule un effort directionnel hexaxial sur la base des signaux détectés à partir des capteurs d'effort triaxiaux (36a à 36f) respectifs.

4. Dispositif mobile de marche bipède (10) selon la revendication 3, **caractérisé en ce que** ladite partie de compensation (32) étalonne automatiquement les signaux détectés à partir des capteurs d'effort triaxiaux (36a à 36f) respectifs par auto étalonnage.

5. Stratégie de commande de marche pour un dispositif mobile de marche bipède (10) qui comporte : un corps principal (11) sur lequel, des deux côtés de sa partie inférieure, une paire de parties de jambe (13L, 13R) est fixée de telle manière que chacune présente une liberté de mouvement pivotant suivant deux axes, chacune des parties de jambe (13L, 13R) comportant une partie de genou (12L, 12R) dans sa partie centrale et une partie de pied (14L, 14R) au niveau de son extrémité inférieure, les parties de pied (14L, 14R) étant fixées sur leurs parties de jambe (13L, 13R) correspondantes de manière à présenter une liberté de mouvement pivotant suivant deux axes, des moyens d'entraînement (15L, 15R à 20L, 20R) destinés à faire pivoter les parties de jambes, de genou, et de pied respectives, et une partie de formation de démarche (24) destinée à former des données de démarche comportant des données pour une trajectoire angulaire cible, des données pour une vitesse angulaire cible et des données pour une accélération angulaire cible en réponse à une demande de déplacement, de telle sorte que la stratégie commande des actions d'entraînement respectives desdits moyens d'entraînement (15L, 15R à 20L, 20R) sur la base desdites données de démarche,

**caractérisée en ce que** :

ladite stratégie de commande de marche comporte, à l'occasion de la correction desdites données de démarche, une première étape de détection des efforts appliqués sur les plantes des parties de pied respectives (14L, 14R) par au moins deux ou plusieurs capteurs triaxiaux (36a à 36f), et une seconde étape de correction desdites données de démarche à partir de ladite partie de formation de démarche (24) sur la base d'un effort de réaction de plancher horizontal calculé à partir du signal détecté à partir desdits capteurs d'effort triaxiaux (36a à 36f), et dans lequel lesdites plantes de parties de pied respectives (14L, 14R) sont divisées en une pluralité de sections, et chaque section divisée comporte l'un des capteurs d'effort triaxiaux (36a à 36f).

6. Stratégie de commande de marche pour un dispositif mobile de marche bipède (10) selon la revendication 5, **caractérisée en ce qu'**une partie de compensation (32) calcule un effort directionnel hexaxial sur la base des signaux détectés à partir des capteurs d'effort triaxiaux (36a à 36f) respectifs.

7. Stratégie de commande de marche pour un dispositif mobile de marche bipède (10) selon la revendication 6, **caractérisée en ce que** ladite partie de compensation (32) étalonne automatiquement les signaux détectés à partir des capteurs d'effort triaxiaux (36a à 36f) respectifs par auto étalonnage.

# FIG. 1

# FIG. 2

# FIG. 3

(A)

(B)

# FIG. 4

(A)                    (B)

# FIG. 5

(A)

(B)

(C)

# FIG. 6

```
              ( Start )          ST1
                 │
    ┌────────────────────────────┐
    │ Forming Gait Data by the   │
    │  Required Motion (J=J)      │
    └────────────────────────────┘
                 │
       ┌──────────────────┐    ST2
       │  Force Detection  │
       └──────────────────┘
       ┌──────────────────┐    ST3
       │ Measurement of State │
       │     Vector φ       │
       └──────────────────┘
    ┌────────────────────────┐   ST4
    │ Computation of Horisonal │
    │   Floor Reaction Force  │
    └────────────────────────┘
       ┌──────────────────┐    ST5
       │ Gait Data Correction │
       └──────────────────┘
       ┌──────────────────┐    ST6
       │ Formation of Torque │
       │     Vector τ      │
       └──────────────────┘
                               ST7
    ┌────────────────────────┐
    │ Drive-Control by Motor  │
    │   Controlling Unit      │
    └────────────────────────┘
                               ST8
    ┌────────────────────────┐
    │       J=J+1             │
    │ (Motion Counter Increment) │
    └────────────────────────┘
                 │
              ST9
          ╱  J>Motion  ╲
         ╱  Terminating  ╲   No
         ╲    Count      ╱
          ╲           ╱
             │ Yes
          ( Stop )
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5305583 A
- EP 0406018 A1